# EUROPÄISCHE PATENTSCHRIFT

(11) **EP 1 279 856 B1**
(45) Veröffentlichungstag und Bekanntmachung des Hinweises auf die Patenterteilung: **13.10.2004**
(21) Anmeldenummer: 02014363.2
(22) Anmeldetag: 27.06.2002
(51) Int. Cl.: F16F 1/387, F01N 7/18

(54) **Radiallager**
Radial bush
Manchon radial

(30) Priorität: 26.07.2001 DE 10137508
(43) Veröffentlichungstag der Anmeldung: 29.01.2003
(73) Patentinhaber: WOCO AVS GmbH, 63628 Bad Soden-Salmünster (DE)
(72) Erfinder: Möller, Ralf, 36381 Schlüchtern (DE); Kalkhof, Volker, 63571 Gelnhausen (DE); Noll, Alexander, 36396 Steinau 2 (DE)
(74) Vertreter: Weber-Bruls, Dorothée, Dr.

(56) Entgegenhaltungen:
- EP-A- 0 964 178
- DE-A- 19 805 401
- GB-A- 1 248 977
- PATENT ABSTRACTS OF JAPAN vol. 005, no. 010 (M-051), 22. Januar 1981 (1981-01-22) -& JP 55 142143 A (JAPANESE NATIONAL RAILWAYS;OTHERS: 01), 6. November 1980 (1980-11-06)

## Beschreibung

Die Erfindung betrifft ein Radiallager. Solche Radiallager sind typischerweise als Hülsenlager ausgebildet und bestehen aus einer Außenhülse, einer Innenhülse und einer zwischen diesen beiden Hülsen angeordneten Elastomerfeder. Bei kurzer axialer Erstreckung kann eine solche Radialfeder auch scheibenartig konfiguriert sein. Während an der Außenhülse eines der beiden gegeneinander zu federnd zu lagernden Maschinenteile angeschlossen ist, ist das andere Maschinenteil an der Innenhülse befestigt.

An der Außenhülse sind üblicherweise Rahmen- oder Befestigungsbleche angeschweißt. Auch kann die Außenhülse in einem Spannauge oder einer,Schelle fixiert sein.

Die Innenhülse kann beispielsweise über einen Bolzen oder einen Haken an das zweite Maschinenteil angeschlossen sein oder, alternativ, durch ein bolzenartiges oder hakenartiges Anschlusselement ersetzt sein, das entweder Bestandteil des zweiten Maschinenteils oder mit diesem in anderer Weise verbunden ist.

Dabei sind die Anschlüsse so konfiguriert, dass die beiden koaxial oder achsparallel zueinander ausgerichteten Anschlusshülsen unter bestimmungsgemäßen Betriebsbedingungen zumindest ganz überwiegend in radialen Richtungen gegeneinander schwingen.

Radiallager dieser Bauweise werden, insbesondere in weitgehend scheibenförmiger Konfiguration, in großer Vielfalt im Kraftfahrzeugbau eingesetzt, so speziell als Aufhängemittel zum Anschluss der Abgasleitung eines Kraftfahrzeuges an die Karosserie.

Auf Grund der stetig zunehmenden Anforderungen an die Abgasreinigung und an die Energierückgewinnung aus den Abgasen des Kraftfahrzeugs sind die Abgasleitungen der Kraftfahrzeuge durch zusätzliche Einbauten zunehmend schwerer geworden. Dies hat bereits vor geraumer Zeit zum Ersatz der ursprünglich verwendeten einfachen ringförmigen Gummihalteschlaufen durch Radiallager der eingangs beschriebenen Art geführt und führt in der aktuellen Entwicklung zu dem Erfordernis, die Elastomerfedern dieser Radiallager zunehmend steifer auszubilden, um ein Überschwingen der schweren Abgasanlagen auszuschalten. Aus diesem Grunde, aber auch aus einer Reihe anderer Gründe, die sowohl technischer als auch nicht-technischer Natur sind, wird von den hier besprochenen Radiallagern erwartet, dass sie beide Lagerhülsen möglichst positionsgenau gegeneinander halten, und zwar bei unverändert guter Störschwingungsdämpfung. Da sich diese Anforderung nicht nur auf eine der radialen Richtungen, sondern auf alle radialen Richtungen, also generell auf alle Vektoren der Radialebene bezieht, muss die Anbindung der Last, hier der Abgasleitung eines Kraftfahrzeugs, in der gesamten Radialebene so steif und fest wie möglich erfolgen. Dies wird technisch durch eine feste, unter Vulkanisation und Vorspannung erfolgte konstruktive Einbindung der Aufhängung innerhalb des äußeren Anschlusselements des Lagers, andererseits durch die Wahl von härteren Werkstoffen erreicht.

Diese dargestellte Lösung, die hier am Beispiel der Aufhängung einer Kraftfahrzeugabgasleitung erläutert ist, führt jedoch zwangsläufig dazu, dass die Radialfeder auch in axialer Richtung des Lagers zunehmend härter, d.h. steifer wird. Dieses Verhalten eines Radiallagers ist jedoch in den meisten Anwendungsfällen unerwünscht. Fast stets werden für den Einsatz von Radiallagern Grenzwerte oder Kennlinien für ein vergleichsweise weiches Federverhalten in der Axialrichtung vorgegeben, und zwar unabhängig von den hohen Steifigkeiten, die in der Radialebene des Lagers erforderlich sind.

Dies trifft auch für das oben beschriebene Beispiel aus der Kraftfahrzeugtechnik zu. Aufgrund ihres Gewichtes muss die Abgasleitung in der Radialebene, bezogen auf die klassischen Kraftfahrzeugvektoren, also in der yz-Ebene, sehr steif und das Lastelement fest ankoppelnd ausgebildet sein, während es in axialer Richtung, also in der x-Richtung der Kraftfahrzeugkoordinaten, weich eingestellt sein soll. Eine Versteifung eines solchen Aufhängelagers auch in x-Richtung würde aufgrund der grossen linearen thermisch bedingten Längenänderungen in der Abgasleitungen aufgrund der hohen Temperaturschwankungen in den verschiedenen Betriebszuständen, unweigerlich zu einer unerwünschten Destabilisierung der Abgasleitungsführung Anlass geben.

Dokument DE-A-198 05 401 zeigt die Merkmale des Oberbegriffs von Anspruch 1.

Ausgehend von diesem Stand der Technik liegt der Erfindung das Problem zu Grunde, ein Hülsenlager oder Radiallager der vorstehend erläuterten Art so zu gestalten, dass es in der Lagerradialebene in allen Richtungen dieser Ebene konstant eine hohe Federsteifigkeit aufweist, während es in Richtung der Lagerachse, die senkrecht zu dieser federsteifen Radialebene angeordnet ist, ein ausgesprochen weiches Federverhalten einzustellen ermöglicht.

Ein Radiallager, das dieses technische Problem zu lösen vermag, weist die Merkmale des Anspruchs 1 auf.

Das Radiallager mit den Merkmalen der Erfindung kann global als "scheibenförmiges Hülsenlager" charakterisiert werden. Dabei dient eine reifartige Außenhülse als eines der beiden Lageranschlusselemente, während das zweite Lageranschlusselement radial innenliegend angeordnet ist, und diese beiden Lageranschlusselemente durch eine profilscheibenförmige Elastomerfeder miteinander verbunden sind.

Das innere Lagerelement kann sowohl als fester und werkseitig zugelieferter Bestandteil des Radiallagers ausgebildet sein, beispielsweise als eingespannte, auch fixierte innenliegende Hülse, kann aber auch als Lageranschlusselement an dem anzuschließenden Maschinenteil, insbesondere einstückig mit diesem, ausgebildet werden. Ein Beispiel für die zuletzt genannte Ausführung ist unter anderem ein Haken zum Aufhängen eines Abschnitts einer Abgasleitung eines Kraftfahrzeuges, wobei hierbei das äußere ringförmige Lagerelement beispielsweise über eine Schelle an der Karosserie des Kraftfahrzeugs fixiert ist.

Bei hinreichender Wärmeisolation oder ausreichender thermischer Beständigkeit des verwendeten Elastomerwerkstoffs kann der Innenanschluss des Radiallagers auch in der Weise realisiert sein, dass in der zentralen Ausnehmung der Elastomerfeder ein rohrförmiger Abschnitt der Abgaslage unmittelbar aufgenommen ist.

Das wesentliche Merkmal der Erfindung bei allen vorstehend angedeuteten Ausführungsvarianten und zahlreichen weiteren denkbaren Realisierungsvarianten besteht darin, dass die Elastomerfeder segmentiert ist und an dem Innenrand jeder der Federsegmente mit einer Profilausnehmung versehen ist, die in axialer Richtung als beidseitig offene Rinne ausgebildet ist. Diese Rinne ist zwischen den beiden Stirnseiten zylindrisch konfiguriert. Der Querschnitt dieser Rinne ist dabei an jedem Punkt der zylindrisch gekrümmten Längserstreckung der Rinne komplementär zum Oberflächenprofil des inneren Lageranschlusselements, und zwar zumindest in dem Bereich, der von dem jeweiligen Federsegment umspannt ist. Wenn also beispielsweise das innenliegende Lageranschlusselement ein kreisrundes Profil ist, sei dies ein Stab, sei dies ein Rohrabschnitt, so weisen die Querschnittprofile aller angreifenden Rinnen aller Lagerfedersegmente an jeder Stelle der Längserstreckung der jeweiligen Rinne ein sich zur Lagerachse hin öffnendes Kreisbogenprofil auf, dessen Krümmungsradius gleich dem Krümmungsradius der Manteloberfläche des kreiszylindrischen inneren Lageranschlusselementes ist.

Die einzelnen axial ausgerichteten Rinnenprofile auf der zentralen Innenseite der Federsegmente sind dabei im spannungsfreien Zustand der Lagerfeder so konfiguriert, dass der Scheitelpunkt der Zylinderkrümmung zum einen mittig zwischen den beiden Stirnseiten der Rinne, und zum anderen in der zentralen Mittelebene des Radiallagers liegt.

Wenn in eine solcher Art definierte zentrale Öffnung des Radiallagers ein inneres Lageranschlusselement eingesetzt würde, dessen Außenprofil gleich dem Innenprofil der durch die Rinnensegmente definierten kleinsten Öffnungsfläche dimensioniert ist, so würde also die innere Öffnung des segmentierten Radiallagers das innere Lageranschlusselement lediglich auf einer Berührungslinie umschließen. Das innere Lageranschlusselement wäre in diesem Fall also in dem Radiallager axial gleitlagerartig aufgenommen. Das innere Lageranschlusselement wäre also im Radiallager in der Radialebene, also in der yz-Ebene voll funktionsfähig gefedert aufgenommen, ohne dass eine federnde Lageranbindung in der axialen Richtung des Radiallagers, also in der x-Richtung gemäß vorstehend gegebener Definition, installiert wäre. Eine solche für die allermeisten praktischen Anwendungen in aller Regel erforderliche federnde Anbindung des inneren Lageranschlusselements in x-Richtung erfolgt dadurch, dass in der radialen zentralen Mittelebene des Radiallagers zwischen Feder und innerem Lageranschlusselement im Zentralbereich der umschließenden Berührungslinie eine in x-Richtung lateral fixierende Anschlussverbindung erzeugt wird, deren Anschlusskraft größer als die größte zu erwartende abzufedernde Kraft ist, die in axialer Richtung des Radiallagers für den jeweiligen Anwendungsfall zu erwarten ist. Eine solche Ankopplung kann prinzipiell durch beliebige Mittel erreicht werden, so beispielsweise durch eine radiale Vorspannung der Lagerfeder, durch Formschluss zwischen Lagerelement und Feder, oder durch Stoffschluss oder auch durch Kombinationen der genannten Anschlussmittel.

Der Vorspannungsanschluss kann dadurch bewirkt werden, dass die Lagerfedersegmente im unverspannten Zustand eine kleinste zentrale axiale Lageröffnung definieren, die kleiner oder deutlich kleiner dimensioniert ist als der Außenumfang des aufzunehmenden inneren Lageranschlusselementes.

Der Formschluss kann beispielsweise durch ein am inneren Lageranschlusselement ausgebildeten umlaufenden Außenflansch hergestellt werden, der in eine komplementäre Aufnahmenut eingreift, die in jeder der Segmentrinnen in der radialen Zentralebene der Lagerfeder quer zum Rinnenverlauf der Aufnahmeprofile ausgebildet ist.

Der Stoffschluss zwischen Feder und innerem Lageranschlusselement kann in an sich bekannter Weise durch Verkleben oder Anvulkanisieren des inneren Lageranschlusselementes mit dem Elastomerfederwerkstoff erfolgen.

Die Segmentierung der profilscheibenförmigen Radiallagerfeder dient bei dieser Art der Fixierung des inneren Lageranschlusselementes in dem Radiallager dem Zweck, eine axiale Flexibilität der Radiallagerfeder herzustellen. Dabei kann die Federkennlinie des Radiallagers in x-Richtung durch die Konfiguration dieser Segmentierung bequem und sehr genau eingestellt werden. In x-Richtung, also in axialer Richtung des Radiallagers, auf das innere Anschlusselement einwirkende Kräfte, insbesondere Schwingungskräfte, werden also durch eine flexible axiale Verformung der zentralen Federsegmentbereiche abgefedert. Dieser Vorgang erfolgt bei zentraler Anbindung des inneren Lageranschlusselementes an den Aufnahmerinnen der Federsegmente gleichsam durch ein Abrollen der Rinnen auf den rechts und links der Fixierung angrenzenden, zum Rinnenprofil komplementären Oberflächen des inneren Lageranschlusselementes. Gleichzeitig bewirkt bei diesem Vorgang die zylindrische axiale Krümmung der Rinnen-Innenprofile, dass bei diesem Abrollvorgang des axial abrollenden Schwingens des inneren Lageranschlusselementes die Federkenndaten in der Radialebene des Radiallages, also in der yz-Ebene, praktisch vollkommen unverändert, also konstant, bleiben.

Das Radiallager mit den Merkmalen der Erfindung stellt sich funktionell, also als ein Radiallager dar, das in der Radialebene, d.h. in der yz-Ebene, konstant und beliebig steif, gegebenenfalls auch mit beliebig eingestellter Anisotropie, ausgestattet sein kann, dabei gleichzeitig aber in der x-Richtung, d.h. also in der Axialrichtung des Radiallagers, beliebig weich ankoppelnd ausgestattet sein kann.

Weitere Ausgestaltungen der Erfindung sind Gegenstand der Unteransprüche.

Die Erfindung und ein Ausführungsbeispiel der Erfindung sind im Folgenden in Verbindung mit den Zeichnungen näher erläutert. Es zeigen:
- Figur 1: ein Radiallager mit den Merkmalen der Erfindung mit drei Federsegmenten in einem äußeren Lageranschlusselement, jedoch ohne inneres Lageranschlusselement;
- Figur 2: das in Figur 1 dargestellte Ausführungsbeispiel, jedoch ohne äußeres, aber mit innerem Lageranschlusselement; und
- Figur 3: die in Figur 2 perspektivisch dargestellte Ansicht in einer nahezu in der Radialebene des Radiallagers eingestellten Seitensicht.

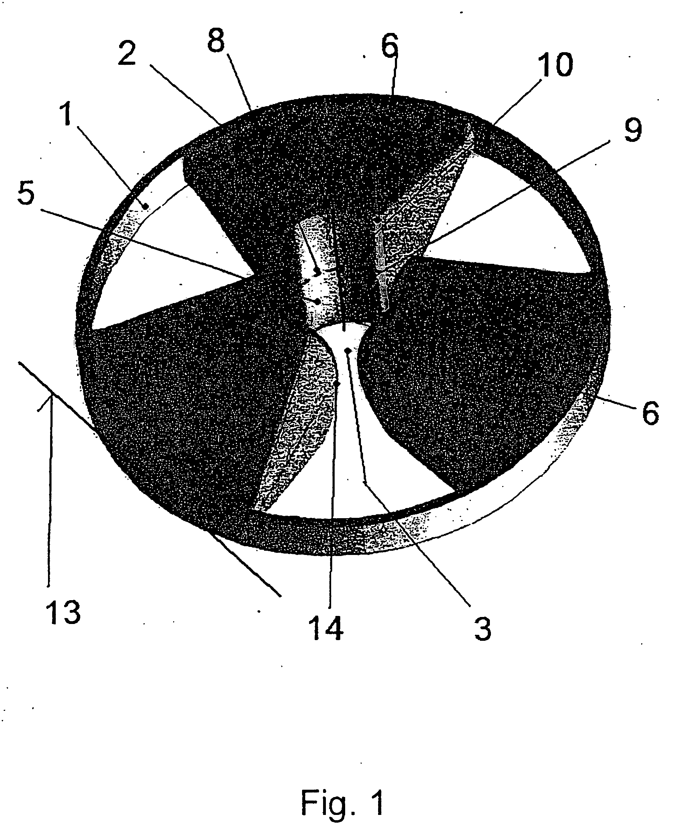

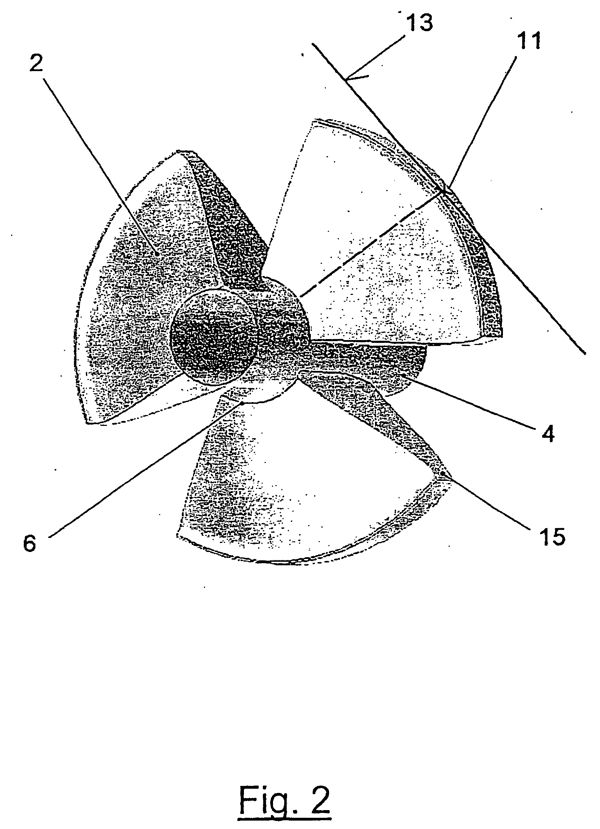

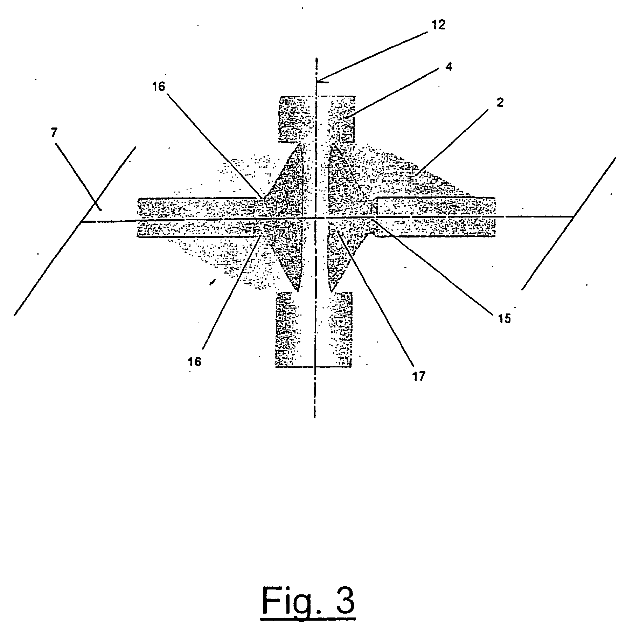

Das in der Figur 1 in perspektivischer Darstellung gezeigte scheibenförmige Radiallager lässt das äußere Lageranschlusselement 1 und die in drei Lagerfedersegmente 2 aufgeteilte profilscheibenförmige Elastomerfeder erkennen. Die Lagerfedersegmente 2 definieren gemeinsam eine zentrale durchgehende Öffnung 3 zur Aufnahme des in der Figur 1 nicht gezeigten, aber in den Figuren 2 und 3 dargestellten inneren Lageranschlusselementes 4.

In dem hier in den Figuren dargestellten Ausführungsbeispiel ist die Lagerfeder in drei identisch konfigurierte Segmente aufgeteilt. Diese drei Federsegmente 2 sind zudem räumlich so konfiguriert, dass sie sich an keiner Stelle gegenseitig berühren.

5 Diese Art der Segmentierung der profilscheibenförmigen Lagerfeder entspricht einer Konfiguration, die zur Aufhängung einer Abgasleitung an einer Fahrzeugkarosserie mit Vorteil einsetzbar ist. Je nach den Anforderungen anderer Einsatzgebiete kann die Segmentierung auch in der Weise erfolgen, dass die Lagerfeder auf ihrem gesamten Außenumfang an der Innenwand des äußeren Lageranschlusselementes 1 fixiert ist und die Segmentierung in der Radialebene von zentral nach peripher nicht über die gesamte Länge des Radius des Ringlagers ausgebildet ist. Wo dies von der Anwendung her erforderlich ist, braucht die Segmentierung der Lagerfeder zudem auch weder durch die Ausbildung von Einschnitten oder Ausnehmungen, noch durch die hier in den Figuren dargestellte vollständige Freistellung der einzelnen Segmente in der Radialebene zu erfolgen, sondern kann sowohl durch Schwächungen im Federprofil, als auch durch andere, die Segmente nicht stofflich voneinander trennende konfigurative Maßnahmen dargestellt werden.

Entscheidend muss die Segmentierung die Aufgabe erfüllen, die Zentralöffnung 3 der Lagerfeder axial federnd auslenkbar einzustellen.

Das innenliegende Lageranschlusselement 4 kann prinzipiell zylindrisch oder prismatisch konfiguriert werden. Für ein bestimmungsgemäßes Zusammenwirken des inneren Lageranschlusselementes mit der durch die Federsegmente gebildeten Aufnahmeöffnung 3 sollte das innere Lageranschlusselement zumindest in dem Bereich, in dem es mit Innenflächen der Lagersegmente bestimmungsgemäß zusammenwirkt, axial linear konfiguriert sein. Nicht erforderlich ist es dagegen, dass das innere Lageranschlusselement in der Radialebene, also in der yz-Ebene, rotationssymmetrisch ist. In dem hier in den Figuren 1 bis 3 gezeigten Ausführungsbeispiel des Radiallagers ist das innere Lageranschlusselement der Einfachheit halber als kreiszylindrische Hülse (Figur 2) oder als kreiszylindrischer Stab (Figur 3) dargestellt.

Jedes der hier gezeigten drei Lagerfedersegmente 2 weist radial innen eine rinnenförmige Raumfläche 5 auf, die sich axial erstreckt und durchgehend nach radial innen offen ausgebildet ist. Diese Definition schließt ein, dass diese innenliegenden rinnenförmigen Raumflächen 5 der Lagerfedersegmente 2 auch an ihren beiden einander gegenüberliegenden Stirnflächen 6 offen konfiguriert sind. Diese Raumflächen 5 sind über ihre gesamte axiale Länge mit einem konstant konfigurierten und dimensionierten Querschnittsprofil ausgebildet. Wie aus den Figuren 1 und 2 ersichtlich, entspricht dieses Querschnittsprofil der rinnenförmigen Raumfläche 5 einem Kreisbogen. Grundsätzlich ist dieses Querschnittsprofil der rinnenförmigen Raumfläche 5 gleich dimensioniert und komplementär konfiguriert zur äußeren Oberfläche des inneren Lageranschlusselementes 4 in dem Bereich, in dem diese äußere Oberfläche des inneren Lageranschlusselementes im Bereich der Durchtrittsöffnung 3 der Lagerfeder mit der inneren Oberfläche der rinnenförmigen Raumfläche 5 kooperierend in Berührung steht.

In der hier im Ausführungsbeispiel der Figuren 1-3 gezeigten Weise sind alle Raumflächen 5 der Federsegmente 2 identisch konfiguriert, da das anzuschließende innere Lageranschlusselement 4 in dem hier gewählten Beispiel rotationssymmetrisch ist. Eine Winkeljustierung in der Radialebene ist also für das innere Lageranschlusselement 4 bezüglich der Lagerfedersegmente 2 vorliegend nicht erforderlich. Bei Verwendung eines inneren Lageranschlusselementes jedoch, das regelmäßig oder asymmetrisch prismatisch konfiguriert ist, sind die Querschnittprofile der rinnenförmigen Raumflächen 5 komplementär zu den kooperierenden Oberflächen eines dann winkelgenau anzuschließenden inneren Lageranschlusselementes auszubilden.

Im axialen Verlauf sind die rinnenförmigen Raumflächen 5 zylindrisch gekrümmt. Die zylindrische Konfiguration der Raumflächen 5 ist funktionswesentlich für ein Radiallager mit den Merkmalen der Erfindung. Zudem ist diese zylindrische Konfiguration ein Erfordernis für alle Arten 5 angeschlossener innerer Lageranschlusselemente, unabhängig davon, ob diese kreiszylindrisch, ovalzylindrisch oder polygonalprismatisch, regelmäßig oder unregelmäßig konfiguriert sind.

Die in ihrem axialen Verlauf zylindrisch gekrümmte rinnenförmige Raumfläche 5 ist derart gestaltet, dass, in axialer Blickrichtung gesehen, der zwischen den beiden Stirnflächen 6 liegende Scheitelpunkt der zylindrischen Rinnenkrümmung in der zentralen radialen Mittelebene 7 (Figur 3) der Lagerfeder liegt. Zudem liegt der Scheitelpunkt der zylindrischen Krümmung der Raumfläche 5 bei der in den Figuren 1 und 2 dargestellten unverspannten Konfiguration der Lagerfedersegmente mittig zwischen den beiden einander axial gegenüberliegenden Stirnflächen 6 dieser Raumfläche.

In der Figur 2, in der die Lagerfederscheibe mit den drei Lagerfedersegmenten 2 ohne das äußere Lageranschlusselement, aber mit innenliegendem Lageranschlusselement 4 dargestellt ist, ist zu Erläuterungszwecken eine Konfiguration angedeutet, bei der der Außenmantelumfang des zylindrisch konfigurierten inneren Lageranschlusselementes 4 ungefähr gleich groß wie der kleinste Durchmesser der Zentralöffnung 3 in der Mittelebene 7 der Lagerfeder ist. Bei senkrechter Ausrichtung der Achse 12 des inneren Lageranschlusselementes 4 zur radialen Mittelebene 7 der Lagerfedersegmente 2 berühren sich der Mantel des inneren Lageranschlusselementes 4 und die Raumfläche 5 entlang einer kreisbogenförmigen Linie 8 (Figur 1), die das komplementäre Abbild der entsprechenden Berührungslinie auf dem Außenmantel des inneren Anschlusselementes 4 ist.

Der Schnittpunkt zwischen der Berührungslinie 8 und der axialen Profilmittellinie 9 der rinnenartigen Raumfläche 5 ist im Folgenden als "Zentralpunkt" dieser Raumfläche 5 bezeichnet. Der durch diesen Zentralpunkt 10 in der Mittelebene 7 der Lagerfeder 2 definierte Radius 5 des Lagerfedersegmentes 2 definiert an dem Punkt, an dem er den radial außenliegenden Rand des Federsegmentes 2 durchstößt, den "zentralen Fußpunkt" 11 (Figur 2) des Federsegmentes 2. Die durch diesen zentralen Fußpunkt 11 senkrecht zur Zentralachse 12 (Figur 3) des Radiallagers verlaufende Tangente 13 (Figur 2) definiert die Zentralachse (13) der zylindrischen Krümmung der Raumfläche 5.

Mit anderen Worten, kann also die sich axial erstreckende rinnenförmige und nach axial ebenso wie radial innen offenen Raumfläche 5 als eine zylindrische Raumfläche beschrieben werden, die durch eine Rotation der Rinnenquerschnittslinie 8 als Generierender durch Rotation um die Zylinderachse 13 definiert ist. Das Profil 14 dieser nicht wie beim regulären Kreiszylinder durch eine Gerade, sondern durch Rotation einer gekrümmten Kurve als Generierender erzeugten Zylinderfläche ist in der Figur 1 gut erkennbar.

Rein anschaulich lässt sich also die für die Lagerfunktion wichtige Raumfläche 5 als Innenfläche einer über den Rücken zylindrisch gekrümmten Regenrinne beschreiben.

Der Sinn und die Funktionsweise der solcher Art konfigurierten rinnenförmigen Raumfläche 5 ist leicht aus der Figur 2 erkennbar.

In der in Figur 2 gezeigten Dimensionierung liegt das innere Lageranschlusselement 4 lediglich locker bündig in der durch die rinnenförmigen Raumflächen 5 aller drei Lagerfedersegmente 2 definierten, zentralen Öffnung 3 des ohne äußeres Lageranschlusselement 1 dargestellten Radiallagers mit den Merkmalen der Erfindung. Ohne weitere entgegenwirkenden Maßnahmen ließe sich das zylindrische innere Lageranschlusselement 4 unter nur geringem Reibungswiderstand aus der Lagerfeder des Radiallagers gleitlagerartig herausziehen.

Sind die beiden kooperierenden Flächen dieser Konstellation, nämlich die Oberfläche des inneren Anschlusselementes 4 und die Innenfläche der 5 rinnenförmigen Raumfläche 5 der Federsegmente 2 nicht glatt ausgebildet, sonder nach Art einer Stirnkranz-Zahnstangen-Verzahnung in der X-Richtung formschlüssig aber beweglich miteinander verbunden, so ist leicht nachzuvollziehen, dass bei einer axialen Verschiebung des inneren Lageranschlusselementes 4 die rinnenförmige Raumfläche 5 auf der Mantelfläche des inneren Lageranschlusselementes 4 gleichsam abrollt, wobei die Federsegmente 2 peripher fixiert, zentral axial aus der Mittelebene auskippend elastisch verformt werden. Das innere Lageranschlusselement 4 ist also in dem Radiallager axial federnd gelagert. Diese Art der axialen Abfederung des inneren Anschlusselementes lässt auch relativ große axiale Auslenkungen oder Störschwingungsamplituden zu, ohne dass aufgrund der zylindrischen Krümmung der rinnenförmigen Raumflächen 5 der Lagerfedersegmente 2 eine Änderung der radialen Federkenndaten dieses Radiallagers erzeugt wird. Aufgrund dieses Prinzips kann also ein Radiallager mit den Merkmalen der Erfindung in der Radialebene, das heißt, bezogen auf die Kraftfahrzeugtechnik, in der yz-Ebene nicht nur so hart wie benötigt, sondern auch praktisch unverändert konstant eingestellt werden, während gleichzeitig quer zu dieser federsteifen Radialebene ein ausgesprochen weiches Federprofil in x-Richtung eingestellt werden kann.

So effektiv solche oder äquivalente Mittel zur Herstellung einer formschlüssigen Ankopplung des innenliegenden Lagerelements 4 an die Lagerfedersegmente 2 auch sein mögen, so werden sie doch Spezialanwendungen vorbehalten bleiben. Für die Serienfertigung, beispielsweise von Kraftfahrzeugen, speziell zur Aufhängung von Abgasleitungen an einer Fahrzeugkarosserie, wird die axiale Federanbindung des innenliegenden Lageranschlusselementes 4 durch einfachere Mittel erfolgen, insbesondere durch eine Vorspannung der radialen Elastomerfedersegmente 2, das heißt, durch eine Unterdimensionierung der Zentralöffnung 3 der Lagerfeder gegenüber dem Querschnitt des innenliegenden Lageranschlusselementes 4 im Bereich der Profilmittellinie 8. Dadurch wird eine Konfiguration der in Figur 3 gezeigten Art erhalten, bei der die "Berührungslinie" 8 zu einer mehr oder minder breiten Kontaktfläche mit entsprechend erhöhtem axialen Reibungswiderstand wird. Ergänzend kann eine solche Anbindung durch Stoffschlussmittel, beispielsweise, durch ein Anvulkanisieren oder Ankleben, erfolgen. Auch bei Herstellung eines Stoffschlusses zwischen innerem Lageranschlusselement und der rinnenförmigen Raumfläche 5 bleiben die beschriebenen Lagereigenschaften erhalten. Eingeschränkt wird bei solchen Anbindungsmitteln lediglich die Grösse der axial abfederbaren Amplituden.

Zur Einstellung der axialen Federkenndaten des Radiallagers mit den Merkmalen der Erfindung dient die Kontur der Lagerfeder im Axialschnitt. Je größer die axial abzufedernde Amplitude sein soll, desto länger muss die axiale Erstreckung der Raumfläche 5 ausgelegt sein. Die Lagerfeder muss also radial innen entsprechend axial dicker ausgelegt werden. Da dies jedoch zu einer Versteifung der Lagerfeder im Zentralbereich führt, muss, um weiche Kenndaten in axialer Richtung einstellen zu können, die vorstehend beschriebene axiale Verkippbarkeit der Lagersegmente durch die Konfiguration von Kipplinien, das heißt einer axialen Schwächung der Lagerfeder im peripheren Bereich der Radialebene, herbeigeführt werden. Die hierbei im Einzelnen zu konfigurierenden Lagerfederprofile hängen von den Anforderungen des vorgesehenen Einsatzzweckes der Radialfeder ab und sind vom Fachmann ohne weiteres konfigurierbar.

In der Konfiguration der Figur 3 ist ein Radiallager gezeigt, das durch relativ große in x-Richtung abfederbare Amplituden bei einem ausgesprochen weichen Kennlinienverlauf in X-Richtung gekennzeichnet ist. Diese Kenndaten sind durch Zusammenwirken (i) einer axial-zentral dicken und (ii) axial-peripher dünnen Ausbildung der Lagerfeder in Verbindung mit der Ausbildung freistehender Lagerfedersegmente erreicht. Durch die axiale Dicke der Profilscheibe der Lagerfeder wird eine axial beachtliche Länge der rinnenförmigen Raumfläche 5 erzeugt, die 5 wiederum weite Abrollwege in axialer Richtung zulässt. Dieses Axialprofil der Lagerfeder verjüngt sich keilartig auf die Innenwand des äußeren Lageranschlusselementes 1 zu (vergleiche auch Figur 1). Im Grenzfall kann diese Verjüngung in einer scharfkantigen keilförmigen Schneide auslaufen, die beispielsweise in einer V-förmigen Profilrinne stützend und stabilisierend formschlüssig aufgenommen ist. Eine solche Konfiguration führt zu einem minimalen Widerstand gegen ein Verkippen der Federsegmente, also auch zu einer minimalen federnd elastischen Rückstellkraft der Lagerfeder in axialer Richtung. Jede Versteifung dieser Grenzkonfiguration durch eine axiale Verstärkung des peripheren Federprofils führt kontinuierlich zu einer Versteifung der axialen Federkennlinie des Radiallagers. Dabei zeigt das insbesondere aus der Figur 3 gut erkennbare Teilprofil der Federsegmente 2 des hier dargestellten Ausführungsbeispiels einen für die Kraftfahrzeugtechnik sinnvollen und auch praktisch brauchbaren Konturverlauf. Dabei sind die Öffnungswinkel der Kegelmantelflächen der Segmente so eingestellt, dass sie sich geometrisch verlängert auf der Innenwand des umschließenden äußeren Lageranschlusselementes 1. schneiden. Diese geometrische Fußpunktlinie des Federsegments ist in der Anlage auf der Innenwand des äußeren Lageranschlusselements soweit mit zylindrischen peripheren Außenrand verbreitert, dass dessen axiale Höhe zumindest im 'Wesentlichen gleich der axialen Höhe des außenliegenden ringförmigen Lageranschlusselementes ist. Das Federsegment ist auf diese Art fest mit dem äußeren Lageranschlusselement verbindbar. Zwischen diesem äußeren Fußring 15 und den Kegelmantelflächen der Radialfedersegmente sind einander axial gegenüberliegende Kehlungen 16 ausgebildet, deren axiale Stärke wesentlich die Federkenndaten der segmentierten Lagerfeder in x-Richtung einzustellen erlauben.

Optimale Öffnungswinkel der im Axialschnitt der Lagerfeder gebildeten Dreiecksflächen 17 der Federsegmente 2 liegen dabei für die Anwendung 5 in der Kraftfahrzeugtechnik im Bereich von 50° bis 150°, insbesondere und vorzugsweise im Bereich von 60° bis 100°. Gleichzeitig liegt bei der hier gezeigten dreiteiligen Segmentierung der Lagerfeder der Öffnungswinkel der einzelnen Federsegmente 2 in der Radialebene vorzugsweise im Bereich von 60° bis 120°. Dabei kann auch die Einstellung dieser in der Radialebene gesehenen Öffnungswinkel der Federsegmente wesentlich in die Gesamtabstimmung der Federkenndaten des Radiallagers mit eingehen.

## Patentansprüche

1. Radiallager, bestehend aus einem starren Rahmen als äusserem Lageranschlusselement (1) mit einer innenliegend am Rahmen befestigten scheibenförmigen Elastomerfeder, in der senkrecht zur Ebene des Rahmens eine durchgehend und beidseitig offene Ausnehmung (3) zur Aufnahme eines inneren Lageranschlusselementes (4) ausgebildet ist,
**gekennzeichnet durch**
eine Segmentierung der Feder in Verbindung mit einer sich in dem radialen Innenrand eines jeden Segmentes (2) nach radial innen öffnend konfigurierten und sich axial beidseitig offen rinnenartig erstreckenden zylindrisch gekrümmten Raumfläche (5), die **durch** eine zur Aussenkonturlinie des inneren Lageranschlusselementes (4) komplementären Generierenden (8) und deren Rotation um eine Zylinderachse (13) definiert ist, die zum einen tangential, also rechtwinklig zur Zentralachse (12) des Radiallagers, ausgerichtet und zum weiteren **durch** den zentralen Fusspunkt (11) der Anbindung des jeweiligen Federsegments (2) an der Innenwand des Lagerrahmens oder äusseren Lageranschlusselementes (1) verlaufend positioniert ist.

2. Radiallager nach Anspruch 1,
**gekennzeichnet durch**
zwei bis zehn im Lagerzentrum unabhängig voneinander axial ausbiegbare Federsegmente (2).

3. Radiallager nach einem der Ansprüche 1 oder 2,
**gekennzeichnet durch**
im Lagerrahmen (1) gegeneinander rundum freistehende Federsegmente (2).

4. Radiallager nach einem der Ansprüche 1 bis 3,
**gekennzeichnet durch**
eine im Axialschnitt gleichschenklig-dreieckige Kontur der spannungsfreien Federsegmente (2) dergestalt, dass die Spitze dieser Dreieckfläche (17) auf der Fusspunktlinie des Segmentes auf der Innenfläche des Lagerrahmens oder äusseren Lageranschlusselementes (1) liegt und die Basis dieses Dreiecks ein Kreisbogen ist, dessen Krümmungsradius gleich der Schenkellänge der Dreiecksfläche ist.

5. Radiallager nach einem der Ansprüche 1 bis 4,
**gekennzeichnet durch**
einen Öffnungswinkel der Axialschnitt-Dreiecksflächen (17) der Federsegmente (2) von radial peripher nach zentral im Bereich von 50° bis 150°.

6. Radiallager nach einem der Ansprüche 1 bis 4,
**gekennzeichnet durch**
einen Öffnungswinkel der Axialschnitt-Dreiecksflächen (17) der Federsegmente (2) von radial peripher nach zentral im Bereich von 60° bis 100°.

7. Radiallager nach einem der Ansprüche 1 bis 6,
**gekennzeichnet durch**
einen Öffnungswinkel der einzelnen Federscheibensegmente (2) in der Radialebene von zentral nach peripher im Bereich von 60° bis 120°.

8. Radiallager nach einem der Ansprüche 1 bis 7,
**gekennzeichnet durch**
eine radial äquidistante Winkelverteilung der Federsegmente (2) im äusseren Lageranschlusselement (1).

9. Radiallager nach einem der Ansprüche 1 bis 8,
**gekennzeichnet durch**
ein das innere Lagerelement (4) radial vorspannend aufnehmendes Untermass der Innenabmessungen der zentralaxialen Ausnehmung (3) des Lagers in der radialen Mittelebene der Elastomerfeder (2).

10. Radiallager nach einem der Ansprüche 1 bis 9,
**gekennzeichnet durch**
einen keilförmig scharfrandigen oder einen koaxial zur Lagerachse zylindrisch angeschnittenen oder einen mit ebenfalls zylindrischer Aussenfläche wulstringartig konfigurierten Aussenrand (15) der segmentierten scheibenförmigen Elastomerfeder des Lagers in Verbindung mit einer stoffschlüssigen oder formschlüssigen und im Ergebnis axial gelenkigen Anbindung (16) der Elastomerfeder (2) an der Innenwand des äusseren Lageranschlusselementes (1).

11. Verwendung des Radiallagers mit den Merkmalen nach einem der Ansprüche 1 bis 10 als Aufhängung für Abgasleitungen und deren Bestandteile im Kraftfahrzeugbau.

## Claims

1. A radial bearing consisting of an outer bearing connection element (1) in the form of a rigid frame with a discoid elastomer spring which is fixed internally to the frame and in which there is formed perpendicularly to the plane of the frame a recess (3) open continuously and on both sides to receive an inner bearing connection element (4), **characterised by** a segmentation of the spring in conjunction with a cylindrically curved spatial surface (5) which extends axially in the form of a channel open on both sides and configured to open radially inwards in the radial inner edge of each segment (2), said spatial surface (5) being defined by a generatrix (8) complementary to the outer contour line of the inner bearing connection element (4) and rotation thereof about a cylinder axis (13) which on the one hand is aligned tangentially, i.e. at right angles to the central axis (12) of the radial bearing, and on the other hand is positioned so as to extend through the central root point (11) of attachment of the respective spring segment (2) to the inner wall of the bearing frame or outer bearing connection element (1).

2. A radial bearing according to claim 1, **characterised by** two to ten spring segments (2) axially deflectable independently of one another in the bearing centre.

3. A radial bearing according to claim 1 or 2, **characterised by** spring segments (2) which all round are freestanding in relation to one another in the bearing frame (1).

4. A radial bearing according to any one of claims 1 to 3, **characterised by** a contour of the stress-free spring segments (2) in the form of an isosceles triangle in axial section in such manner that the apex of this triangular surface (17) lies on the root point line of the segment on the inner surface of the bearing frame or outer connection element (1) and the base of said triangle is an arc of a circle the radius of curvature of which is equal to the length of the sides of the triangular surface.

5. A radial bearing according to any one of claims 1 to 4, **characterised by** an aperture angle of the axial section triangular surfaces (17) of the spring segments (2) from radially peripherally to centrally in the range from 50° to 150°.

6. A radial bearing according to any one of claims 1 to 4, **characterised by** an aperture angle of the axial section triangular surfaces (17) of the spring segments (2) from radially peripherally to centrally in the range from 60° to 100°.

7. A radial bearing according to any one of claims 1 to 6, **characterised by** an aperture angle of the individual spring disc segments (2) in the radial plane from centrally to peripherally in the range from 60° to 120°.

8. A radial bearing according to any one of claims 1 to 7, **characterised by** a radially equidistant angular distribution of the spring segments (2) in the outer bearing connection element (1).

9. A radial bearing according to any one of claims 1 to 8, **characterised by** undersizing of the internal dimensions of the centrally axial opening (3) of the bearing in the radial central plane of the elastomer spring (2) so as to accommodate the inner bearing element (4) with radial prestressing.

10. A radial bearing according to any one of claims 1 to 9, **characterised by** an outer edge (15) of the segmented discoid elastomer spring of the bearing, such outer edge (15) being cut so as to have a wedge-shaped sharp edge or cylindrically coaxially to the bearing axis, or being configured in the form of a bead ring with a likewise cylindrical outer surface, in conjunction with an attachment (16) of the elastomer spring (2) against the inner wall of the outer bearing connection element (1) such as to be axially pivotable as a result of a material connection or a positive connection.

11. Use of a radial bearing having the features according to any one of claims 1 to 10 as a suspension for exhaust gas pipes and parts thereof in automotive engineering.

## Revendications

1. Palier radial, formé d'un cadre rigide, faisant office d'élément de raccordement de palier extérieur (1), avec un ressort en élastomère discoïde, fixé intérieurement sur le cadre, dans lequel, perpendiculairement par rapport au plan du cadre, est réalisé un évidement (3), continu et ouvert sur les deux côtés, afin de recevoir un élément de raccordement de palier intérieur (4),
**caractérisé par**
une segmentation du ressort, en liaison avec une surface tridimensionnelle (5), configurée pour s'ouvrir radialement vers l'intérieur, en formant le bord intérieur radial de chaque segment (2) et incurvé à un forme cylindrique, en s'étendant en forme de goulotte, ouverte axialement sur les deux côtés, la surface tridimensionnelle étant définie par une génératrice (8), complémentaire de la ligne de contour extérieure de l'élément de raccordement de palier intérieur (4) et par sa rotation autour d'un axe de cylindre (13), qui, d'une part, est orienté tangentiellement, donc à angle droit par rapport à l'axe central (12) du palier radial, et qui, d'autre part, est positionné en passant par le point de pied (11), central, de l'attachement du segment de ressort (2) respectif, à la paroi intérieure du cadre de palier ou de l'élément de raccordement de palier extérieur (1).

2. Palier radial selon la revendication 1,
**caractérisé par**
deux à dix segments de ressort (2), flexibles axialement, indépendamment les uns des autres, au centre de palier.

3. Palier radial selon l'une des revendications 1 ou 2,
**caractérisé par**
des segments de ressort (2), isolés les uns vers les autres sur le pourtour, dans le cadre de palier (1).

4. Palier radial selon l'une des revendications 1 à 3,
**caractérisé par**
un contour, à forme triangulaire isocèle observée en coupe axiale, des segments de ressort (2) exempts de contraintes, en ce que la pointe de cette face de triangle (17) est située sur la ligne de point de pied du segment, sur la face intérieure du cadre de palier ou du segment de raccordement de palier extérieur (1), et la base de ce triangle est un arc de cercle, dont le rayon de courbure est identique à la longueur de côté de la face triangulaire.

5. Palier radial selon l'une des revendications 1 à 4,
**caractérisé par**
un angle d'ouverture des faces triangulaires, observées en coupe axiale (17), des segments de ressort (2), allant radialement de la périphérie vers le centre, dans la plage de 50° à 150 °.

6. Palier radial selon l'une des revendications 1 à 4,
**caractérisé par**
un angle d'ouverture des faces de triangle observées en coupe axiale des segments de ressort (2), allant radialement de la périphérie vers le centre, dans la plage de 60° à 100°.

7. Palier radial selon l'une des revendications 1 à 6,
**caractérisé par**
un angle d'ouverture des différents segments de disque de ressort (2) dans le plan radial, allant du centre vers la périphérie, dans la plage de 60° à 120°.

8. Palier radial selon l'une des revendications 1 à 7,
**caractérisé par**
une distribution angulaire, radialement équidistante, de segments de ressort (2) dans l'élément de raccordement de palier extérieur (1).

9. Palier radial selon l'une des revendications 1 à 8,
**caractérisé par**
un sous-dimensionnement, ayant comme effet de supporter radialement avec précontrainte l'élément de palier intérieur (4), des dimensions intérieures de l'évidement central axial (3) du palier dans le plan médian radial du ressort en élastomère (2).

10. Palier radial selon l'une des revendications 1 à 9,
**caractérisé par**
un bord extérieur (15) à bord vif, cunéiforme, ou découpé à la forme cylindrique, coaxialement par rapport à l'axe de palier ou configuré à la façon d'un bourrelet annulaire, avec une face extérieure également cylindrique, du ressort en élastomère discoïde segmenté du palier, en liaison avec un attachement (16), par une liaison par la matière ou bien par liaison par ajustement de formes et, en résultat, donnant une articulation axiale du ressort en élastomère (2) sur la paroi intérieure de l'élément de raccordement de palier extérieur (1).

11. Utilisation du palier radial, présentant les caractéristiques selon l'une des revendications 1 à 10, comme suspension pour des conduites de gaz d'échappement et leurs composants, dans la construction de véhicules automobiles.
